# EUROPÄISCHE PATENTSCHRIFT

(11) **EP 3 867 027 B1**
(45) Veröffentlichungstag und Bekanntmachung des Hinweises auf die Patenterteilung: **23.11.2022**
(21) Anmeldenummer: 19782940.1
(22) Anmeldetag: 26.09.2019
(51) Int. Cl.: B26D 5/00, B26F 1/38, G05B 19/418

(54) **VERFAHREN ZUM VISUALISIEREN VON PROZESSINFORMATIONEN BEI DER FERTIGUNG VON BLECHBAUTEILEN**
METHOD FOR VISUALIZING PROCESS INFORMATION DURING THE PRODUCTION OF SHEET METAL COMPONENTS
PROCÉDÉ DE VISUALISATION D'INFORMATIONS DE PROCESSUS LORS DE LA PRODUCTION DE COMPOSANTS EN TÔLE

(30) Priorität: 19.10.2018 DE 102018126059
(43) Veröffentlichungstag der Anmeldung: 25.08.2021
(73) Patentinhaber: TRUMPF Werkzeugmaschinen GmbH + Co. KG, 71254 Ditzingen (DE)
(72) Erfinder: KIEFER, Manuel, 74889 Sinsheim (DE); WEISS, Korbinian, 70825 Korntal (DE); SCHWARZ, Benjamin, 70825 Münchingen (DE); PÖNITZ, Willi, 71229 Leonberg (DE)
(74) Vertreter: Trumpf Patentabteilung
(86) Internationale Anmeldenummer: PCT/EP2019/075984
(87) Internationale Veröffentlichungsnummer: WO 2020/078683

(56) Entgegenhaltungen:
- EP-A1- 1 524 063
- US-A1- 2017 368 706
- US-B1- 6 298 275

## Beschreibung

Die vorliegende Erfindung betrifft ein Verfahren zum Visualisieren von Prozessinformationen bei der Fertigung von Werkstücken, insbesondere von Blechbauteilen, welches zur Unterstützung eines Absortiervorgangs eingesetzt werden kann. Ferner betrifft die Erfindung ein Fertigungssteuerungssystem zur Steuerung von Prozessen bei der Fertigung von Blechbauteilen, insbesondere zur Steuerung mindestens einer Anzeigevorrichtung einer Flachbettwerkzeugmaschine, die mittels Prozessinformationsdarstellung zur Unterstützung eines Absortiervorgangs eingesetzt wird.

Beispielhaft für die metallverarbeitende Industrie werden in der industriellen Metall- und/oder Blechverarbeitung oft viele Teile unterschiedlicher Größe und Stückzahl verschiedenen Verarbeitungsschritten zugeführt. So werden beispielsweise Werkstücke mit einer Werkzeugmaschine gemäß einem Schneidplan in verschiedenen Formen und Stückzahlen aus einem beispielsweise in einer Tafelform vorliegenden Flachmaterial getrennt. Beispielsweise werden die Werkstücke aus dem Flachmaterial mit einem Laser ausgeschnitten. Derartige Werkzeugmaschinen geben die bearbeiteten Werkstücke, z. B. das Laserschnittgut meist unter Beibehaltung der Tafelform nebeneinander liegend beispielsweise auf einer Palette oder einem Förderband aus. Von dort werden sie absortiert und weiteren Verarbeitungsschritten zugeführt.

Bei der Blechverarbeitung werden Kamera-basierte Unterstützungssysteme zur Überwachung von Verarbeitungsvorgängen wie dem genannten Absortiervorgang eingesetzt.

In DE 10 2016 120 131 A1 ist beispielsweise ein kamerabasiertes Absortierunterstützungsverfahren für eine Flachbettwerkzeugmaschine offenbart. Nachteilig ist hier, dass der Maschinenbediener Informationen außer dem Sammelplatz für die Werkstücke nicht oder nur sehr umständlich erhält.

In der US 2017/0368706 A1 ist ein Verfahren zur werkstückbezogenen Anzeige von Qualitätskategorien eines Werkstoffs offenbart.

In der EP 1 524 063 A1 ist eine Vorrichtung zur Markierung von Werkstücken mt einem Projektor offenbart.

In der US 6,298,275 B1 ist ein Verfahren zur Anzeige zu entnehmender Werkstücke offenbart.

Einem Aspekt dieser Offenbarung liegt die Aufgabe zugrunde, einem Maschinenbediener die Bedienung beim Absortieren und Zuordnen der Werkstücke weiter zu vereinfachen sowie, ergonomischer zu gestalten und eine zielgerichtetere und schnellere Zuordnung der Werkstücke zu ermöglichen.

Zumindest eine dieser Aufgaben wird gelöst durch ein Verfahren zum Visualisieren von Fertigungsprozessinformation bei der Fertigung von Werkstücken mit einer Flachbettwerkzeugmaschine nach Anspruch 1 und durch ein Fertigungssystem zur Fertigung von Werkstücken nach Anspruch 9. Weiterbildungen sind in den Unteransprüchen angegeben.

Ein Aspekt der hierin offenbarten Konzepte betrifft ein Verfahren zum Visualisieren von Fertigungsprozessinformation bei der Fertigung von Werkstücken, insbesondere von Blechbauteilen, mit einer Flachbettwerkzeugmaschine. Dabei werden die Werkstücke als Schnittgut auf einer Palette der Flachbettwerkzeugmaschine, einem Absortiertisch oder einem Förderband ausgegeben. Das Schnittgut behält dabei plattenförmige Anordnung gemäß eines plattenförmigen Ausgangsmaterials bei. Das Verfahren umfasst die folgenden Schritte:
- Bereitstellen von Werkstückbilddaten in einem Fertigungssteuerungssystem, wobei die Werkstückbilddaten mindestens einem der Werkstücke des Schnittguts zugeordnet und zum Anzeigen auf eine Anzeigeneinheit ausgebildet sind;
- Bereitstellen von werkstückspezifischer Fertigungsprozessinformation im Fertigungssteuerungssystem, wobei die Fertigungsprozessinformation werkstückspezifisch bei der Fertigung der Werkstücke in der Flachbettwerkzeugmaschine erfasst wurde und Fertigungsmerkmale der in der Flachbettwerkzeugmaschine durchgeführten Trennvorgänge (insbesondere Laserschneidvorgänge) bei der Fertigung der Werkstücke umfasst;
- Bereitstellen einer Datenbank mit Darstellungsoptionen im Fertigungssteuerungssystem, wobei die Darstellungsoptionen jeweils einem spezifischen Fertigungsmerkmal der Fertigungsprozessinformation zugeordnet sind und auf die Werkstückbilddaten anwendbar sind, um eine spezifisch für ein Fertigungsmerkmal vorgegebene Darstellung von Werkstückbilddaten auf einer Anzeigeeinheit zu bewirken; und
- Anzeigen der Werkstückbilddaten des mindestens einen der Werkstücke des Schnittguts auf der Anzeigeneinheit unter werkstückspezifischer Berücksichtigung der Darstellungsoptionen.

In einem weiteren Aspekt weist ein Fertigungssystem zur Fertigung von Werkstücken, insbesondere von Blechbauteilen, eine Flachbettwerkzeugmaschine auf, die dazu ausgebildet ist, die Werkstücke als Schnittgut auf einer Palette der Flachbettwerkzeugmaschine, einem Absortiertisch oder einem Förderband auszugeben, wobei das Schnittgut in einer plattenförmigen Anordnung gemäß eines plattenförmigen Ausgangsmaterials angeordnet ist. Das Fertigungssystem weist ferner ein Fertigungssteuerungssystem auf, das dazu eingerichtet ist, ein wie zuvor beschriebenes Verfahren zum Visualisieren von Fertigungsprozessinformation bei der Fertigung von Werkstücken mit der Flachbettwerkzeugmaschine auszuführen. Das Fertigungssystem weist ferner eine Anzeigeeinheit zum Anzeigen von Werkstückbilddaten auf.

Die Werkstückbilddaten sind mindestens einem der Werkstücke des Schnittguts zugeordnet. Das Anzeigen erfolgt unter werkstückspezifischer Berücksichtigung von Darstellungsoptionen, die jeweils einem spezifischen Fertigungsmerkmal der Fertigungsprozessinformation zugeordnet und auf die Werkstückbilddaten anwendbar sind, um eine spezifisch für ein Fertigungsmerkmal vorgegebene Darstellung der jeweiligen Werkstückbilddaten auf der Anzeigeeinheit zu bewirken. Die Anzeigeeinheit ist z. B. ein Monitor der Flachbettwerkzeugmaschine, ein Display einer Mobileinheit eines Ortungssystems oder ein Kontrollmonitor, der beispielsweise auch zur Ausgabe eines von einer Maschineninnenraumkamera aufgenommenen Bildes des Schnittguts vorgesehen ist.

In einigen Ausführungsformen des Verfahrens werden die Werkstückbilddaten aus einem im Fertigungssteuerungssystem abgelegten Fertigungsplan, der der Fertigung der Werkstücke zugrunde liegt, gelesen. Die Werkstückbilddaten können als eine das Schnittgut repräsentierende Grafik dargestellt werden, bei dem die Fertigungsmerkmale für einen Bediener visuell hervorgehoben sind. Die Werkstückbilddaten können Teil eines von einer Maschineninnenraumkamera aufgenommenen Bildes des Schnittguts sein und die Berücksichtigung einer Darstellungsoption kann zu einer Überlagerung von einem Fertigungsmerkmal zugeordneten Bilddaten auf das Bild des Schnittguts führen.

In einigen Ausführungsformen des Verfahrens kann ein Fertigungsmerkmal mittels eines Farbspektrums der Werkstückbilddaten oder einer Werkstückgrenzlinie als Darstellungsoption dargestellt werden. Ein Fertigungsmerkmal kann insbesondere die Schneidqualität eines Laserschneidvorgangs des Ausgangsmaterials entlang einer Konturlinie betreffen. So kann ein, insbesondere trennkonturbezogenes, Fertigungsmerkmal eine Kollision zwischen einem Bearbeitungskopf der Flachbettwerkzeugmaschine und dem zu bearbeitenden Ausgangsmaterial oder einem abgetrennten Werkstück, ein Schnittabriss beim Schneidvorgang, ein Wiedereinstieg in einen Schneidvorgang, eine Anomalie des Schneidvorgangs wie ein langer Einstechvorgang, ein Düsenabstand zum plattenförmigen Ausgangsmaterial außerhalb eines vorgegebenen Bereichs, eine Verschmutzung eines Schutzglases oder ein Plasmasensorsignal des Schneidvorgangs sein.

In einigen Ausführungsformen des Verfahrens kann ein Fertigungsmerkmal einer spezifischen Position auf dem plattenförmig ausgegebenen Schnittgut zugeordnet sein oder sich auf die Trennkontur beziehen. Beispielsweise kann ein Fertigungsmerkmal aus einem Sensorsignal einer Fertigungsüberwachung, insbesondere einer Schneidsensorik, gewonnen werden, um insbesondere qualitativ hochwertige, prozess- und schneidqualitätsrelevante Informationen trennkonturbezogen dem Fertigungssteuerungssystem zur Verfügung zu stellen.

Allgemein umfassen die Darstellungsoptionen graphische Visualisierungen, die insbesondere auf einer Farbcodierung und/oder Symbolen basieren.

In einigen Ausführungsformen des Verfahrens kann zusätzlich in Abhängigkeit einer dem Absortiervorgang zugrundeliegenden Vereinzelungsstrategie unter Berücksichtigung von einem Folgeprozessschritt, einem Auftraggeber, einem Auftrag oder einer Baugruppe eine Kategorie von Werkstücken gebildet werden. Werkstücke einer gleichen Kategorie können farblich einheitlich dargestellt werden oder mit einer die Werkstücke einer gleichen Kategorie umgebenden Abgrenzungslinie gekennzeichnet werden.

Die hierein beschriebenen Konzepte weisen beispielsweise den Vorteil auf, dass Informationen einem Maschinenbediener derart angezeigt werden können, dass ein Vereinzelungsprozess und/oder Absortiervorgang effizienter gestaltet werden kann. Das Anzeigen von Fertigungsmerkmalen kann ferner die Qualitätskontrolle erleichtern und verbessern.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine beispielhafte Darstellung einer Werkzeugmaschine bei einem Absortiervorgang,
- Fig. 2: eine Skizze zur Verdeutlichung der Darstellung von Informationen aus einer werkstückspezifischen Prozessüberwachung mit Werkstückdaten und
- Fig. 3: ein Flussdiagramm eines beispielhaften Verfahrens zum einen Absortiervorgang unterstützenden Anzeigen von Werkstück-Bildern und/oder Auftragsdaten bei der Fertigung von Werkstücken.

Hierin beschriebene Aspekte basieren zum Teil auf der Erkenntnis, dass nach einem Schneidprozess an Laserflachbettmaschinen einem Maschinenbediener bei der Teilevereinzelung Informationen zum vorhergehenden Schneidprozess zur Verfügung gestellt werden können. Dies ist möglich, da Werkzeugmaschinen eine Mehrzahl an Bearbeitungsparameter erfassen, aus denen beispielsweise Hinweise auf eine Teilequalität hervorgehen können. Diese Informationen können dem Maschinenbediener nun Bauteil- oder Kontur-bezogen visualisiert werden.

Gemäß den hierin offenbarten Konzepten kann in einer Grafik der Tafelbelegung geschnittene Bauteile in Abhängigkeit von Prozessmerkmalen und Einflüssen grafisch visualisiert werden. Dafür können beispielsweise Farben und Symbole zum Einsatz kommen. Beispielsweise können einem Maschinenbediener Informationen zu einer Kollision zwischen Laserbearbeitungsdüse und Blech nicht nur mit einem Zeitstempel mitgeteilt werden, sondern sie können zusätzlich auch noch fertigungsspezifisch erfasst und werkstückspezifisch übermittelt werden, insbesondere welches Bauteil betroffen ist und z. B. wo auf der Kontur des Bauteils die Kollision geschah. Eine daraus resultierende Qualitätsminderung kann somit schnell und präzise lokalisiert und bewertet werden.

Bei Flachbettwerkzeugmaschinen kann einem Maschinenbediener mitgeteilt werden, wenn eine Laserbearbeitungsdüse (aus der der Laserschneidstrahl austritt und die über das Blech entlang von Schneidkonturen verfahren wird) mit dem bearbeiteten Blech, meist einem verkippten ausgeschnittenen Werkstück, kollidiert oder kollidieren würde. Gemäß den hierin offenbarten Konzepten kann nun dem Maschinenbediener ermöglicht werden, eine durch die Kollision hervorgerufene Qualitätsminderung des Werkstücks zeitnah und besonders schnell, insbesondere in weniger als 1 s, und präzise zu lokalisieren und zu inspizieren.

Gemäß den hierin offenbarten Konzepten ist es nun möglich zeitnah und in Verbindung mit einem erzeugten Werkstück Informationen zum Fertigungsprozess anzuzeigen, wobei die Präsentation von beispielsweise Bildinhalten in einer Weise, die auf die physischen Gegebenheiten der menschlichen Wahrnehmung und Aufnahme von Informationen Rücksicht nimmt, erfolgt. Insbesondere ist das Darstellen von Information darauf gerichtet, die Wahrnehmung der gezeigten Informationen durch den Maschinenbediener in bestimmter Weise überhaupt erst zu ermöglichen und überdies zweckmäßig zu gestalten.

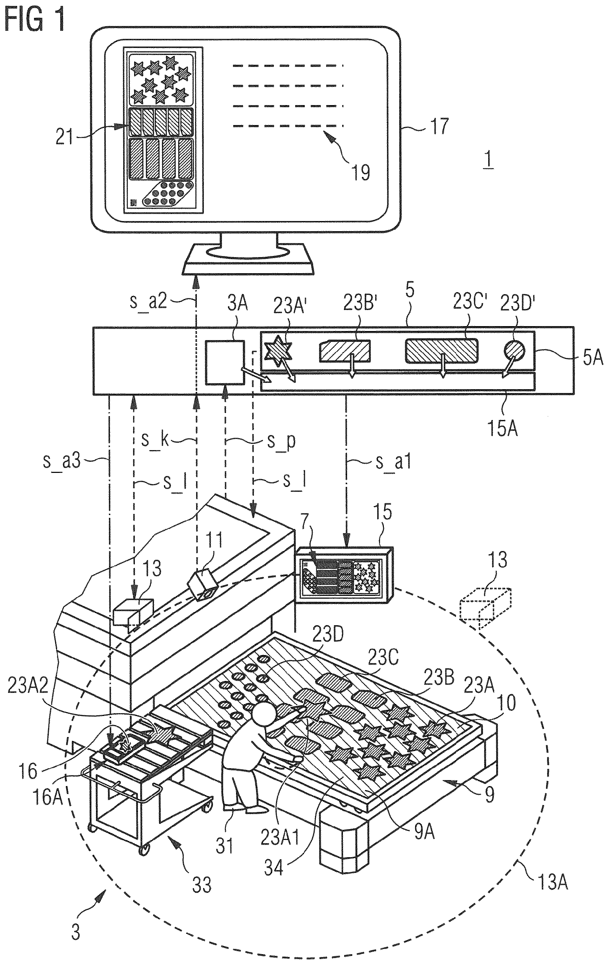

Fig. 1 zeit schematisch ein Fertigungssystem 1, das eine Flachbettwerkzeugmaschine 3 und ein Fertigungssteuerungssystem 5 umfasst.

Zur Verdeutlichung des Umfelds der hierin angesprochenen industriellen Bearbeitung von Werkstücken zeigt Fig. 1 einen Absortiervorgang, wie er im Zusammenhang mit der beispielsweise als Laserschneidmaschine ausgebildeten Flachbettwerkzeugmaschine 3 vorgenommen werden kann. Gemäß einem Fertigungsplan 5A, der im Fertigungssteuerungssystem 5 vorliegt, werden Werkstücke 23A, 23A1, 23A2, 23A3,...23D (hierin auch als Schnittgut 10 bezeichnet) geschnitten und einem Bediener 31 der Flachbettwerkzeugmaschine 3 zum Absortieren beispielsweise auf einem Absortiertisch 9 bereitgestellt. Dabei liegen die Werkstücke 23A, 23A1, 23A2, 23A3,...23D nebeneinander auf einer Palette 9A, die mit dem Ausgangsmaterial bestückt für den Schneidvorgang in die Laserschneidmaschine gebracht wird. Nach dem Schneidvorgang werden die Werkstücke beispielsweise unter Beibehalten einer ursprünglichen Tafelform ausgegeben, wobei die Tafelform durch das der Laserschneidmaschine zugeführte Flachmaterial bedingt ist. Im Falle einer Laserschneidmaschine wurden die Werkstücke 23A, 23A1, 23A2, 23A3,...23D vom Restmaterial 34 (gestrichelter Bereich) des Flachmaterials durch Laserschneiden abgetrennt. die Werkstücke liegen aber noch in der vom Restmaterial 34 gebildeten Tafelstruktur vor. In Fig. 1 erfolgt der Absortiervorgang direkt von der Palette 9A der Flachbettwerkzeugmaschine 3. Alternativ kann das Absortieren z. B. von einem sich an die Flachbettwerkzeugmaschine 3 anschließenden Förderband aus erfolgen.

Allgemein kann das Fertigungssteuerungssystem 5 dazu ausgelegt sein, mit einer oder mehreren in einer Fertigungshalle positionierten Flachbettwerkzeugmaschinen über kabellose oder kabelgebundene Kommunikationsverbindungen verbunden zu werden. Allgemein kann das Fertigungssteuerungssystem 5 der Steuerung von Prozessabläufen/Fertigungsschritten bei der industriellen Fertigung von Werkstücken mit einer Werkzeugmaschine dienen. Dazu kann das Fertigungssteuerungssystem 5 Informationen über die Prozessabläufe/Fertigungsschritte sowie Statusinformation der Werkzeugmaschine empfangen. Das Fertigungssteuerungssystem 5 kann in einer Datenverarbeitungsvorrichtung implementiert sein. Bei dieser kann es sich um eine einzelne elektronische Datenverarbeitungsvorrichtung (Server) oder um einen Verbund von mehreren Datenverarbeitungsvorrichtungen (Serververbund/Cloud) handeln. Die Datenverarbeitungsvorrichtung oder der Verbund kann örtlich in der Fertigungsstätte vorgesehen werden oder außerhalb dezentral aufgebaut werden.

Beispielsweise übergibt die Flachbettwerkzeugmaschine 3 Fertigungsprozessinformation 3A an das Fertigungssteuerungssystem 5. Hierzu liegt z. B. eine Prozessdaten-Signalverbindung s_p vor.

Fig. 1 verdeutlicht schematisch ferner, dass der Fertigungsplan 5A digital im Fertigungssteuerungssystem 5 abgelegt ist. Im Fertigungsplan 5A ist z. B. Auftragsinformation zur industriellen Bearbeitung von Fertigungsplan-spezifischen Werkstücken hinterlegt. Fertigungspläne umfassen allgemein Auftragsinformation, die beispielsweise Werkstückdaten 23A', ...23D' in Form von Geometriedatensätzen der Bearbeitungsplan-spezifischen Werkstücke und/oder in Form eines Trennplans vorliegt. Der Trennplan gibt an, wie die Werkstücke mit z. B. einem Laserstrahl aus der Ausgangstafel herausgeschnitten werden. Ferner kann der Fertigungsplan 5A einen oder mehrere Bearbeitungs- und Werkstückparameter der Bearbeitungsplan-spezifischen Werkstücke umfassen.

Für einen Schneidvorgang übergibt das Fertigungssteuerungssystem 5 z. B. Fertigungsanweisungen des Fertigungsplans 5A (insbesondere den Trennplan) an die Flachbettwerkzeugmaschine 3; beispielhaft ist hierzu eine Fertigungsdaten-Signalverbindung s_f in Fig. 1 angedeutet.

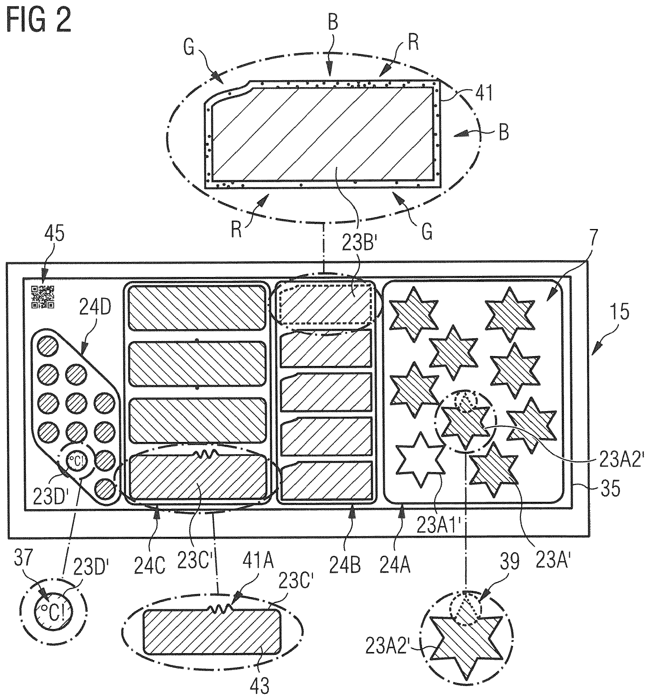

In Fig. 1 ist ferner eine Kamera 11 (Maschineninnenraumkamera) zur bildgebenden Erfassung des Absortiervorgangs schematisch dargestellt. Mit der Kamera 11 kann beispielsweise überwacht werden, welche Tafel aufgelegt wurde und wie viele Werkstücke oder welche Werkstücke einer geschnittenen Tafel bereits absortiert wurden. Es können auch mehrere Kameras vorgesehen werden. Zur Erkennung einer geschnittenen Tafel kann z. B ein Schnittmuster oder ein Code (siehe auch Fig. 2) erfasst werden. Die Kamera 11 übergibt Bilddaten an das Fertigungssteuerungssystem 5, beispielsweise über eine Kamerabilddaten-Signalverbindung s_k.

Das Fertigungssteuerungssystem 5 ist dazu eingerichtet, den Bediener 31 visuell über Anzeigen zu unterstützen. Beispielsweise übergibt sie allgemein Bilddaten, die z. B. auch die Bilddaten der Kamera umfassen können, an eine Anzeigeeinheit 17. Diese ist beispielsweise über eine Bilddaten-Signalverbindung s_a2 mit dem Fertigungssteuerungssystem 5 verbunden. Die Anzeigeeinheit 17 ist beispielsweise ein Kontrollmonitor, auf dem eine Aufnahme 21 der Kamera 11 sowie Auftragsinformationen 19 (beispielsweise in Textform) angezeigt werden. Allgemein können auf Anzeigen im Fertigungssystem neben fertigungsspezifischen Aspekten Informationen zum Auftrag, lesbar für Mensch und/oder Maschine, codiert und/oder in Schriftform und/oder als Figur dargestellt werden.

Beispielhaft ist in Fig. 1 ferner ein Lokalisierungssystem mit Ortungseinheiten 13 angedeutet. Die Ortungseinheiten 13 stehen über Lokalisierungsdaten-Signalverbindung s_l mit dem Fertigungssteuerungssystem 5 in Verbindung. Sie sind dazu ausgebildet, in einem Ortungsbereich 13A z. B. Bewegungen einer Hand des Bedieners 31 beim Absortieren oder die aktuellen Positionen von Mobileinheiten des Lokalisierungssystems zu erfassen. In Fig. 1 ist beispielhaft eine Mobileinheit 16A auf einem Transportwagen 33 abgelegt worden. Insbesondere werden diejenigen Werkstücke auf dem Transportwagen 33 abgelegt, die für einen spezifischen Auftrag (hier Werkstücke 23A 2) bei nachfolgenden Fertigungsschritten mit der Mobileinheit 16A zu verfolgen sind. Dafür können Positionsdaten dem Fertigungssteuerungssystem 5 über die Lokalisierungsdaten-Signalverbindung s_l bereitgestellt werden.

Die Mobileinheit 16A weist eine Anzeigeeinheit 16 auf. Über eine Bilddaten-Signalverbindung s_a3 können Informationen von dem Fertigungssteuerungssystem 5 zur Mobileinheit 16A gesendet und auf der Anzeigeeinheit 16 ausgegeben werden.

Alternativ oder ergänzend kann ein Monitor der Flachbettwerkzeugmaschine 3 (Anzeigeneinheit 15 in Fig. 1) vorgesehen werden. Die dargestellten Daten müssen nicht immer vollständig den gesamten Informationsgehalt eines Werkstücks oder Fertigungsvorgangs abbilden. Vielmehr können die Anzeigen kontextbasiert die für den entsprechenden Fertigungsvorgang notwendigen Daten darstellen, beispielsweise den nächsten Fertigungsvorgang für die Logistik, Teilegeometrie für die Kommissionierung, Bauteiltoleranzen für die Qualitätsprüfung. Darstellungsparameter wie Größe, Farbe, Bewegung und Blinken stellen dabei geeignete Mittel zur Betonung und Unterstützung von aktuell wichtigen Informationen dar.

Insbesondere ist das Fertigungssteuerungssystem 5 dazu ausgebildet, mit derartigen Darstellungsoptionen die werkstückspezifische Fertigungsprozessinformation 3A dem Maschinenbediener 31 zugänglich zu machen. Beispielhaft sind Darstellungsoptionen 15A in Fig. 1 im Fertigungssteuerungssystem 5 abgelegt und können zusammen mit der Fertigungsprozessinformation 3A und den Werkstückdaten 23A', ...23D' über die Bilddaten-Signalverbindungen s_al, ... an die Anzeigeeinheiten 15, 16, 17 ausgegeben werden.

In Fig. 2 ist eine Ansicht von auf der Anzeigeneinheit 15 dargestellten Monitorbilddaten 7 gezeigt, bei der verschiedene Aspekte der Kenntlichmachung von Fertigungsprozessinformation für einzelne geschnittene Werkstücke verdeutlicht werden. Die Monitoranzeigen können vom Bediener 31 dazu genutzt werden, die Fertigungsprozessinformation beim Absortieren zu berücksichtigen. Insbesondere kann sie die Prüfung der Teilequalität erleichtern, da der Bediener Informationen zum Fertigungsprozess dargestellt bekommt, die u. a. die Qualität der Fertigung eines Werkstücks beeinflussen können.

Fig. 2 zeigt beispielhaft die mit der Kamera 11 aufgenommene Aufsicht auf das Schnittgut 10 in Fig. 1. Das Schnittgut 10 umfasst beispielhaft vier Verbunde von verschieden geformten Werkstücken 23A, ...23D, die auf dem Auflageelement (der Palette 9A in Fig. 1) angeordnet sind. Zur Verdeutlichung sind Grenzlinien angedeutet, die die Werkstückverbunde 24A, ...24D umschließen. Das Schnittgut 10 wurde an einer bekannten Position im Raum mithilfe der entsprechend verschiebbaren Palette 9A platziert. Es wird darauf hingewiesen, dass die Werkstücke 23A, ...23D und das Restmaterial 34 sich im Erscheinungsbild für den Bediener oft kaum voneinander unterscheiden lassen. Dies ist insbesondere dann der Fall, wenn sehr feine Laserschneidlinien eingesetzt werden. Insofern weicht die Darstellung in Fig. 2 in seiner Deutlichkeit von der realen Erkennbarkeit von geschnittenen Werkstücken ab. Ein großer Monitor hat den Vorteil, dass die gesamte Blechtafel mit allen ausgeschnittenen Teilen dargestellt werden kann und die über die Tafel verteilten Teile eines Werkstückverbundes z. B. durch Farbcodierung hervorgehoben sein können. Durch die eindeutige Visualisierung der Zuordnung können auch kleine Teile zuverlässig z. B. auf der Palette 9A identifiziert werden.

In einigen Ausführungsformen kann das Flachmaterial mit einem maschinenlesbaren Code (z. B. Data Matrix Code: DMC) versehen werden. Der maschinenlesbare Code kann zur reproduzierbaren Positionierung des Schnittguts immer an einer vorbestimmten Stelle vorgesehen werden. Auf der Monitoranzeige kann ein Abbild 45 des Codes, insbesondere ein digitales Abbild, angezeigt werden.

Ferner kann der Code dazu genutzt werden, automatisch im Fertigungssteuerungssystem 5 den Trennplan, mit dem das Schnittgut erzeugt wurde, zu identifizieren. Aus der bekannten Position des Schnittguts und dem Trennplan können im Fertigungsteuerungssystem 5 die Positionen der Werkstücke abgeleitet werden. So können z. B. die Formen der Werkstücke im Kamerabild hervorgehoben werden. Beispielsweise können verschiedene Werkstücke mit Werkstückdatensätzen 23A', ...23D' mit unterschiedlichen Farben dargestellt werden oder es können die Grenzen der Werkstücke unterscheidbar dargestellt und betont werden. Andere Ausgabe- bzw.

Kennzeichnungsmöglichkeiten wie blinken, flackern, flattern, wackeln, drehen, etc. sind ebenfalls umsetzbar. Ergänzend können Positionen von Microjoints und Teilemarkierungen ebenfalls eingeblendet werden.

Die bekannten Positionen der Werkstücke können ferner dazu genutzt werden, werkstückspezifische Fertigungsprozessinformation 3A sichtbar zu machen, d. h., diese dem Bediener 31 anzuzeigen. Mit anderen Worten können in der grafischen Darstellung eines Werkstücks z. B. eine Zusatzinformation aus der Prozessüberwachung des Fertigungsprozesses punktuell oder in Form eines Konturabschnitts visualisiert werden.

Dies kann im Rahmen eines Verfahrens zum Visualisieren von Fertigungsprozessinformation 3A bei der Fertigung von Werkstücken 23A, ... mit einer Flachbettwerkzeugmaschine 3 erfolgen, wobei folgende Schritte durchgeführt werden:
Es werden Werkstückbilddaten 23A', ... im Fertigungssteuerungssystem 5 bereitgestellt. Diese können auf einer Bilderfassung mit einer Kamera (z. B. Kamera 11) oder auf im Fertigungsplan 5A hinterlegten Bilddaten basieren. Die Werkstückbilddaten 23A', ... können z. B. aus dem im Fertigungssteuerungssystem 5 abgelegten Fertigungsplan 5A, der der Fertigung der Werkstücke 23A, ... zugrunde lag/liegt, gelesen werden. Die Werkstückbilddaten 23A', ... sind dabei mindestens einem der Werkstücke 23A, ... des Schnittguts 10 zugeordnet und sie können auf einer Anzeigeneinheit, z. B. einer der Anzeigeneinheit 15, 16, 17, angezeigt werden.

Ferner wird werkstückspezifische Fertigungsprozessinformation 3A im Fertigungssteuerungssystem 5 bereitgestellt. Diese wurde werkstückspezifisch bei der Fertigung der Werkstücke 23A, ... in der Flachbettwerkzeugmaschine 3 erfasst und umfasst Fertigungsmerkmale der in der Flachbettwerkzeugmaschine 3 durchgeführten Trennvorgänge. Ein Fertigungsmerkmal kann einer spezifischen Position auf dem plattenförmig ausgegebenen Schnittgut 10 zugeordnet sein oder trennkonturbezogen sein. Fertigungsmerkmale können aus einem Sensorsignal einer Fertigungsüberwachung, insbesondere einer Schneidsensorik, gewonnen werden, um insbesondere qualitativ hochwertige, prozess- und schneidqualitätsrelevante Informationen trennkonturbezogen dem Fertigungssteuerungssystem 5 zur Verfügung zu stellen.

Ferner liegt eine Datenbank mit Darstellungsoptionen 15A im Fertigungssteuerungssystem 5 vor, wobei die Darstellungsoptionen 15A jeweils einem spezifischen Fertigungsmerkmal der Fertigungsprozessinformation 3A zugeordnet sind. Die Darstellungsoptionen 15A sind auf die Werkstückbilddaten 23A', ... derart anwendbar, dass eine spezifisch für ein Fertigungsmerkmal vorgegebene Darstellung von Werkstückbilddaten 23A', ... auf der Anzeigeeinheit 15 bewirkt wird. So kann ein Fertigungsmerkmal z. B. mittels eines Farbspektrums der Werkstückbilddaten 23A', ... oder einer Werkstückgrenzlinie 41 als Darstellungsoption dargestellt werden oder ein spezifisches Symbol umfassen. Fertigungsmerkmale können insbesondere die Schneidqualität eines Laserschneidvorgangs des Ausgangsmaterials entlang einer Konturlinie betreffen.

Verfahrensgemäß werden die Werkstückbilddaten 23A', ... des mindestens einen der Werkstücke 23A, ... des Schnittguts 10 auf der Anzeigeneinheit unter werkstückspezifischer Berücksichtigung der Darstellungsoptionen 15A angezeigt. Beispielsweise können die Werkstückbilddaten 23A', ... als eine das Schnittgut 10 repräsentierende Grafik dargestellt werden, bei dem die Fertigungsmerkmale für einen Bediener 31 visuell hervorgehoben sind. Gehen dabei z. B. die Werkstückbilddaten 23A', ... auf einen Teil eines von einer Maschineninnenraumkamera 11 aufgenommenen Bildes des Schnittguts 10 zurück, kann die Berücksichtigung einer der Darstellungsoptionen 15A zu einer Überlagerung von einem Fertigungsmerkmal zugeordneter Bilddaten auf das Bild des Schnittguts 10 führen.

Beispielsweise können folgende Zusatzinformationen mithilfe der Fertigungsprozessinformation für den Bediener 31 visualisiert werden:
- Die Schneidqualität oder weitere relevante Parameter können mittels eines Farbspektrum für den Bediener dargestellt werden.
- Werkstücke, die Kollisionen mit dem Schneidkopf ausgesetzt waren, können hervorgehoben werden, um eine gesonderte Qualitätskontrolle auszulösen. Dies gilt auch für Werkstücke, bei deren Fertigung z. B. ein Schnittabriss, ein Wiedereinstieg, eine Anomalie wie ein zu langedauerndes Einstechen oder ein ungewöhnlicher Düsenabstand, Verschmutzungen eines Schutzglases (Streulicht, Fokusshift) und/oder Plasmasensorsignale aufgetreten sind.
- Neben einer statischen Visualisierung auf der Tafel können, wenn eine Entnahme des Werkstücks z. B. mit dem Lokalisierungssystem detektiert wird, die Informationen gesondert und nochmals deutlicher dargestellt werden.
- In einigen Ausführungsformen kann eine Überlagerung der Informationen mit einem Livebild der Maschineninnenraumkamera vorgenommen werden oder auf ein Livebild am Ausgang der Maschine, z. B. an einem Palettenwechsler, dargestellt werden.
- Ferner können die Fertigungsprozessinformation in eine Liveüberlagerung des Fertigungsprozesses integriert werden oder erst Fertigstellung eines Schneidvorgangs in die Ansicht der nach Tafel übertragen werden.

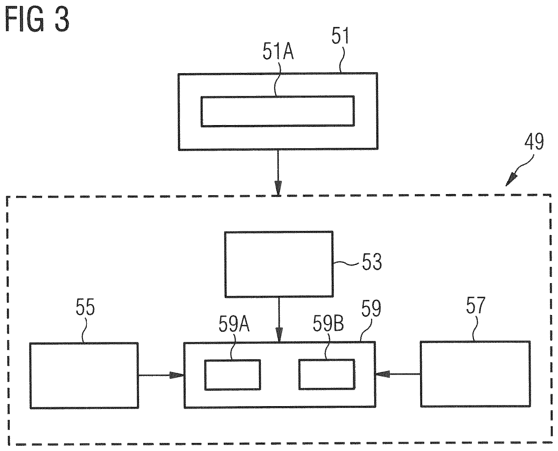

In Form eines schematisierten Flussdiagramms zeigt Fig. 3 ein beispielhaftes Verfahren 49 zum Visualisieren von Fertigungsprozessinformation bei der Fertigung von Werkstücken in folgende Schritte untergliedert.

In einem Schritt 51 werden gefertigte Werkstücke 23A, 23A1, ... auf dem Absortiertisch 9 bereitgestellt. Dabei können beispielsweise die Werkstücke 23A ... bestimmt werden, die zum Absortieren an der Absortierstelle, d. h., von dem Absortiertisch 9 aus für den Bediener 31 zugänglich positioniert sind. Dabei kann Information über schlecht geschnittene oder bereits heruntergefallene Werkstücke 23A.. berücksichtigt werden.

In einem Schritt 53 wird die werkstückspezifische Fertigungsprozessinformation 3A im Fertigungssteuerungssystem 5 bereitgestellt, wobei die Fertigungsprozessinformation 3A werkstückspezifisch bei der Fertigung der Werkstücke 23A, ... in der Flachbettwerkzeugmaschine 3 erfasst wurde und Fertigungsmerkmale der in der Flachbettwerkzeugmaschine 3 durchgeführten Trennvorgänge bei der Fertigung der Werkstücke 23A, ... umfasst.

In einem Schritt 55 können die Werkstückbilddaten 23A', ... aus einem im Fertigungssteuerungssystem 5 abgelegten Fertigungsplan 5A, der der Fertigung von Werkstücke 23A, ...) zugrunde liegt, gelesen werden, wobei die Werkstückbilddaten 23A', ... als eine das Schnittgut (10) repräsentierende Grafik dargestellt werden können, bei dem die Fertigungsmerkmale für einen Bediener (31) visuell hervorgehoben sind. Alternativ oder zusätzlich können die Werkstückbilddaten 23A', ... Teil eines von einer Kamera 11 aufgenommenen Bildes des Schnittguts 10 sein. Dabei kann insbesondere die Berücksichtigung einer Darstellungsoption 15A zu einer Überlagerung von einem Fertigungsmerkmal zugeordneten Bilddaten auf das Bild des Schnittguts 10 führen.

In einem Schritt 57 werden eine Datenbank mit Darstellungsoptionen 15A im Fertigungssteuerungssystem 5 bereitgestellt, wobei die Darstellungsoptionen 15A jeweils einem spezifischen Fertigungsmerkmal der Fertigungsprozessinformation 3A zugeordnet sind und auf die Werkstückbilddaten 23A', ... anwendbar sind, um eine spezifisch für ein Fertigungsmerkmal vorgegebene Darstellung von Werkstückbilddaten 23A', ... auf einer Anzeigeeinheit 15 zu bewirken.

In einem Schritt 59 können die Werkstückbilddaten 23A', ... des mindestens einen der Werkstücke 23A, ... des Schnittguts 10 auf der Anzeigeneinheit 15, 16, 17 unter werkstückspezifischer Berücksichtigung der Darstellungsoptionen 15A angezeigt werden.

In einem Schritt 59A kann ein Fertigungsmerkmal mittels eines Farbspektrums (R, G, B), das in den Werkstückbilddaten 23A', ... oder in einer Werkstückgrenzlinie (41) als Farbcodierung umgesetzt ist, als Darstellungsoption dargestellt werden.

In einem Schritt 59B kann zusätzlich oder alternativ ein Fertigungsmerkmal mittels einer mit einer Farbcodierung umgesetzten Werkstückgrenzlinie 41 dargestellt werden.

Bei beiden Schritten 59A und 59B kann dabei ein Fertigungsmerkmal die Schneidqualität eines Laserschneidvorgangs des Ausgangsmaterials entlang einer Konturlinie betreffen.

Die Darstellung kann begleitet werden von z. B.
- einer Visualisierung der oben genannten Punkte mit einer Simulation, die zusammen mit einer numerischen Steuerung (NC) auf einer grafischen Benutzeroberfläche oder Benutzerschnittstelle, die die Kommunikation zwischen Mensch und Maschine ermöglicht (HMI), dargestellt werden kann,
- in Abhängigkeit der Vereinzelungsstrategie (Folgeprozessschritt, Kunde, Auftrag, Baugruppe, etc.) einer farblich einheitlichen Kennzeichnung von Werkstücken der gleichen Kategorie und
- einem Anzeigen von Stichproben für eine Qualitätskontrolle und von Informationen zu Messpunkten und Merkmalen.

Mit den hierin vorgeschlagenen Konzepten können u. a. Sensorsignale, die für verschiedene Aspekte des Fertigungsprozesses vorliegen, dem Bediener bereitgestellt werden, so dass in Verbindung mit einem erzeugten Werkstück Informationen zum Fertigungsprozess angezeigt werden können, wobei die Präsentation von beispielsweise Bildinhalten in einer Weise erfolgt, die auf die physischen Gegebenheiten der menschlichen Wahrnehmung und Aufnahme von Informationen Rücksicht nimmt. Insbesondere kann die Fertigungsinformation in der Darstellung darauf ausgerichtet sein, die Wahrnehmung der gezeigten Informationen durch den Maschinenbediener in bestimmter Weise überhaupt erst zu ermöglichen und für Arbeitsschritte zweckmäßig zu gestalten. Ferner können durch die Integration einer Schneidsensorik in einen Schneidkopf z. B. weitere qualitativ hochwertige, prozess- und schneidqualitätsrelevante Informationen konturbezogen zur Verwendung in der Qualitätsprüfung verfügbar gemacht werden.

Beispielhafte Umsetzungen der Darstellung von Fertigungsprozessinformation sind in Fig. 2 schematisch gezeigt. Man erkennt für das dargestellte Schnittgut 10 eine Darstellung des Plattenrands 35 und vier Abgrenzungslinie 24A, ...24D, die jeweils graphische Darstellung von Werkstückdaten 23A', ...23D' voneinander abtrennen. Ferner erkennt man, dass das Werkstück 23A1 bereits absortiert wurde, d. h., keine Werkstückdaten 23A'1 mehr angezeigt werden. Des Weiteren ist ein Abbild 45 für den Code der bearbeiteten Materialtafel eingeblendet.

Folgende Beispiele der Kombination von Darstellungsoptionen und Fertigungsprozessinformation werden in Fig. 2 schematisch angedeutet: Für eine Darstellung von Werkstückdaten 23A2' wird eine Schneidkontur in einem Bereich gestrichelt als Symbol 39 für einen Schnittabriss gezeigt. Für eine Darstellung von Werkstückdaten 23B' wird entlang einer Schneidkontur 41 eine Farbkodierung mit Rot R, Grün G und Blau B (in Fig. 2 mit Punktierungsdichten dargestellt) vorgesehen, die als Symbol einen Abstandsfehler beim Schneidprozess angibt. Für eine Darstellung von Werkstückdaten 23C' wird entlang einer Schneidkontur eine Hervorhebung eines Bereichs 41A vorgenommen, bei dem eine Einstichzeit nicht der Normdauer entspricht. Ferner kann das gesamte Werkstück mit einer Warnfarbe oder einer besonderen Schraffur 43 kenntlich gemacht werden. Als weiteres Beispiel für eine Anzeige von Fertigungsprozessinformation wird der Darstellung von Werkstückdaten 23D' ein Temperatur-Symbol 37 überlagert worden.

Es wird angemerkt, dass zusätzlich in Abhängigkeit einer dem Absortiervorgang zugrundeliegenden Vereinzelungsstrategie unter Berücksichtigung von einem Folgeprozessschritt, einem Auftraggeber, einem Auftrag oder einer Baugruppe Kategorien von Werkstücken 23A, ... gebildet werden können und beispielsweise Werkstücke 23A, ... einer gleichen Kategorie farblich einheitlich dargestellt werden können oder mit einer die Werkstücke 23A, ... einer gleichen Kategorie umgebenden Abgrenzungslinie 24A, ... gekennzeichnet werden können.

## Patentansprüche

1. Verfahren zum Visualisieren einer Fertigungsprozessinformation (3A) bei der Fertigung von Werkstücken (23A, ...), insbesondere von Blechbauteilen, mit einer Flachbettwerkzeugmaschine (3), wobei die Werkstücke (23A, ...) als Schnittgut (10) auf einer Palette (9A) der Flachbettwerkzeugmaschine (3), einem Absortiertisch (9) oder einem Förderband ausgegeben werden und das Schnittgut (10) in einer plattenförmigen Anordnung gemäß eines plattenförmigen Ausgangsmaterials vorliegt, mit den Schritten:
Bereitstellen von Werkstückbilddaten (23A', ...) in einem Fertigungssteuerungssystem (5), wobei die Werkstückbilddaten (23A', ...) mindestens einem der Werkstücke (23A, ...) des Schnittguts (10) zugeordnet und zum Anzeigen auf eine Anzeigeneinheit (15, 16, 17) ausgebildet sind,
Bereitstellen einer werkstückspezifischen Fertigungsprozessinformation (3A) im Fertigungssteuerungssystem (5),
Bereitstellen einer Datenbank mit Darstellungsoptionen (15A) im Fertigungssteuerungssystem (5), wobei die Darstellungsoptionen (15A) jeweils einem spezifischen Fertigungsmerkmal der Fertigungsprozessinformation (3A) zugeordnet sind und auf die Werkstückbilddaten (23A', ...) anwendbar sind, um eine spezifisch für ein Fertigungsmerkmal vorgegebene Darstellung von Werkstückbilddaten (23A', ...) auf einer Anzeigeeinheit (15) zu bewirken, und
Anzeigen der Werkstückbilddaten (23A', ...) des mindestens einen der Werkstücke (23A, ...) des Schnittguts (10) auf der Anzeigeneinheit (15, 16, 17) unter werkstückspezifischer Berücksichtigung der Darstellungsoptionen (15A),
**dadurch gekennzeichnet, dass** die Fertigungsprozessinformation (3A) werkstückspezifisch bei der Fertigung der Werkstücke (23A, ...) in der Flachbettwerkzeugmaschine (3) erfasst wurde und Fertigungsmerkmale der in der Flachbettwerkzeugmaschine (3) durchgeführten Trennvorgänge bei der Fertigung der Werkstücke (23A, ...) umfasst.

2. Verfahren nach Anspruch 1, wobei die Werkstückbilddaten (23A', ...) aus einem im Fertigungssteuerungssystem (5) abgelegten Fertigungsplan (5A), der der Fertigung von Werkstücke (23A, ...) zugrunde liegt, gelesen werden und/oder
wobei die Werkstückbilddaten (23A', ...) als eine das Schnittgut (10) repräsentierende Grafik dargestellt werden, bei dem die Fertigungsmerkmale für einen Bediener (31) visuell hervorgehoben sind.

3. Verfahren nach Anspruch 1, wobei die Werkstückbilddaten (23A', ...) Teil eines von einer Kamera (11) aufgenommenen Bildes des Schnittguts (10) sind und die Berücksichtigung einer Darstellungsoption (15A) zu einer Überlagerung von einem Fertigungsmerkmal zugeordneten Bilddaten auf das Bild des Schnittguts (10) führt.

4. Verfahren nach einem der vorhergehenden Ansprüche, wobei ein Fertigungsmerkmal mittels eines Farbspektrums (R, G, B), das in den Werkstückbilddaten (23A', ...) oder in einer Werkstückgrenzlinie (41) als Farbcodierung umgesetzt ist, als Darstellungsoption dargestellt wird, und/oder
wobei ein Fertigungsmerkmal die Schneidqualität eines Laserschneidvorgangs des Ausgangsmaterials entlang einer Konturlinie betrifft.

5. Verfahren nach einem der vorhergehenden Ansprüche, wobei ein, insbesondere trennkonturbezogenes, Fertigungsmerkmal
- eine Kollision zwischen einem Bearbeitungskopf der Flachbettwerkzeugmaschine (3) und dem zu bearbeitenden Ausgangsmaterial oder einem abgetrennten Werkstück (23A, ...),
- ein Schnittabriss bei einem Schneidvorgang,
- ein Wiedereinstieg in einen Schneidvorgang,
- eine Anomalie wie ein langer Einstechvorgang beim Schneidvorgang,
- ein Düsenabstand, zum insbesondere Flachmaterial, außerhalb eines vorgegebenen Bereichs,
- eine Verschmutzung eines Schutzglases oder
- ein Plasmasensorsignal des Schneidvorgangs ist.

6. Verfahren nach einem der vorhergehenden Ansprüche, wobei ein Fertigungsmerkmal einer spezifischen Position auf dem plattenförmig ausgegebenen Schnittgut (10) zugeordnet ist oder sich auf eine Trennkontur bezieht ist und/oder
wobei ein Fertigungsmerkmal aus einem Sensorsignal einer Fertigungsüberwachung, insbesondere einer Schneidsensorik der Flachbettwerkzeugmaschine (3), gewonnen wird, um insbesondere qualitativ hochwertige, prozess- und schneidqualitätsrelevante Informationen trennkonturbezogen dem Fertigungssteuerungssystem (5) zur Verfügung zu stellen.

7. Verfahren nach einem der vorhergehenden Ansprüche, wobei die Darstellungsoptionen graphische Visualisierungen umfassen, die insbesondere auf einer Farbcodierung (43, R, G, B) und/oder auf Symbolen (37, 39, 41) basieren.

8. Verfahren nach einem der vorhergehenden Ansprüche, wobei zusätzlich in Abhängigkeit einer dem Absortiervorgang zugrundeliegenden Vereinzelungsstrategie unter Berücksichtigung von einem Folgeprozessschritt, einem Auftraggeber, einem Auftrag oder einer Baugruppe eine Kategorie von Werkstücken (23A, ...) gebildet wird und die Werkstücke (23A, ..) einer gleichen Kategorie farblich einheitlich dargestellt werden oder mit einer die Werkstücke (23A, ...) einer gleichen Kategorie umgebenden Abgrenzungslinie (24A, ...) gekennzeichnet werden.

9. Fertigungssystem (1) zur Fertigung von Werkstücken (23A, ...), insbesondere von Blechbauteilen, mit:
einer Flachbettwerkzeugmaschine (3), die dazu ausgebildet ist, die Werkstücke (23A, ..) als Schnittgut (10) auf einer Palette (9A) der Flachbettwerkzeugmaschine (3), einem Absortiertisch (9) oder einem Förderband auszugeben, wobei das Schnittgut (10) plattenförmig gemäß eines plattenförmigen Ausgangsmaterials angeordnet ist,
einem Fertigungssteuerungssystem (5), das dazu eingerichtet ist, ein Verfahren zum Visualisieren einer Fertigungsprozessinformation (3A) bei der Fertigung von Werkstücken (23A, ...) mit der Flachbettwerkzeugmaschine (3) nach einem der vorhergehenden Ansprüche auszuführen, und
einer Anzeigeeinheit (15, 16, 17) zum Anzeigen von Werkstückbilddaten (23A', ...), die mindestens einem der Werkstücke (23A, ...) des Schnittguts (10) zugeordnet sind, unter werkstückspezifischer Berücksichtigung von Darstellungsoptionen (15A), die jeweils einem spezifischen Fertigungsmerkmal der Fertigungsprozessinformation (3A) zugeordnet sind und auf die Werkstückbilddaten (23A', ...) anwendbar sind, um eine spezifisch für ein Fertigungsmerkmal vorgegebene Darstellung der jeweiligen Werkstückbilddaten (23A', ...) auf der Anzeigeeinheit (15) zu bewirken.

10. Fertigungssteuerungssystem nach Anspruch 9, wobei die Anzeigeeinheit (15, 16, 17) ein Monitor der Flachbettwerkzeugmaschine (3), ein Display einer Mobileinheit, insbesondere eines Ortungssystems (13), oder ein Kontrollmonitor zur Ausgabe eines von einer Kamera (11), insbesondere einer Maschineninnenraumkamera, aufgenommenen Bilds des Schnittguts (10) ist.

## Claims

1. A method for visualising production process information (3A) during the production of workpieces (23A, ...), in particular sheet metal components, with a flat-bed machine tool (3), the workpieces (23A, ...) being output as cut material (10) on a pallet (9A) of the flat-bed machine tool (3), a sorting table (9), or a conveyor belt, and the cut material (10) being in a plate-shaped arrangement according to a plate-shaped starting material, comprising the steps of:
providing workpiece image data (23A', ...) in a production control system (5), the workpiece image data (23A', ...) being associated with at least one of the workpieces (23A, ...) of the cut material (10) and being configured to be displayed on a display unit (15, 16, 17),
providing workpiece-specific production process information (3A) in the production control system (5),
providing a database with depiction options (15A) in the production control system (5), the depiction options (15A) each being associated with a specific production feature of the production process information (3A) and being applicable to the workpiece image data (23A', ...), in order to effect a depiction, specifically predefined for a production feature, of workpiece image data (23A', ...) on a display unit (15), and
displaying, on the display unit (15, 16, 17), the workpiece image data (23A', ...) of the at least one of the workpieces (23A, ...) of the cut material (10), taking into account workpiece-specific depiction options (15A),
**characterised in that** the production process information (3A) has been acquired in a workpiece-specific manner during the production of the workpieces (23A, ...) in the flat-bed machine tool (3) and comprises production features of the cutting processes carried out in the flat-bed machine tool (3) during the production of the workpieces (23A, ...).

2. The method according to claim 1, wherein the workpiece image data (23A', ...) are read from a production plan (5A) stored in the production control system (5), on which the production of the workpieces (23A, ...) is based, and/or
wherein the workpiece image data (23A', ...) are depicted as a graphic representing the cut material (10), in which the production features are visually highlighted to an operator (31).

3. The method according to claim 1, wherein the workpiece image data (23A', ...) are part of an image captured by a camera (11) of the cut material (10) and the consideration of a depiction option (15A) results in an overlay of image data associated with a production feature on the image of the cut material (10).

4. The method according to any one of the preceding claims, wherein a production feature is depicted as a depiction option using a colour spectrum (R, G, B), which is implemented in the workpiece image data (23A', ...) or in a workpiece boundary line (41) as colour coding, and/or
wherein a production feature relates to the cutting quality of a laser cutting operation of the starting material along a contour line.

5. The method according to any one of the preceding claims, wherein a production feature, in particular relating to the separation contour, is
- a collision between a processing head of the flat-bed machine tool (3) and the starting material to be processed or a separated workpiece (23A, ...),
- a cut break during a cutting process,
- a re-entry into a cutting process,
- an anomaly such as a long grooving process during the cutting process,
- a nozzle distance, in particular from the flat material, outside a specified range,
- a soiling of a protective glass or
- a plasma sensor signal of the cutting process.

6. The method according to any one of the preceding claims, wherein a production feature is associated with a specific position on the cut material (10) output in a plate-shaped manner or relates to a separation contour and/or
wherein a production feature is obtained from a sensor signal of a production monitoring system, in particular a cutting sensor system of the flat-bed machine tool (3), in order to provide to the production control system (5) in particular high-quality information relevant to process quality and cutting quality in relation to the cutting contour.

7. The method according to any one of the preceding claims, wherein the depiction options comprise graphic visualisations which are based in particular on colour coding (43, R, G, B) and/or on symbols (37, 39, 41).

8. The method according to any one of the preceding claims, wherein a category of workpieces (23A, ...) is additionally formed depending on a separation strategy underlying the sorting process, taking into account a subsequent process step, a customer, an order or an assembly, and the workpieces (23A, ...) of the same category are depicted in a uniform manner in terms of colour or are marked with a demarcation line (24A, ...) surrounding the workpieces (23A, ...) of the same category.

9. A production system (1) for producing workpieces (23A, ...), in particular sheet metal components, comprising:
a flat-bed machine tool (3), which is configured to output the workpieces (23A, ...) as cut material (10) on a pallet (9A) of the flat-bed machine tool (3), a sorting table (9) or a conveyor belt, the cut material (10) being arranged in a plate-shaped manner according to a plate-shaped starting material,
a production control system (5), which is set up to execute a method for visualising production process information (3A) during the production of workpieces (23A, ...) with the flat-bed machine tool (3) according to any one of the preceding claims, and
a display unit (15, 16, 17) for displaying workpiece image data (23A', ...) which are associated with at least one of the workpieces (23A, ...) of the cut material (10), taking into account workpiece-specific depiction options (15A), each of which is associated with a specific production feature of the production process information (3A) and can be applied to the workpiece image data (23A', ...), in order to effect a depiction, specifically predefined for a production feature, of the respective workpiece image data (23A', ...) on the display unit (15).

10. The production control system according to claim 9, wherein the display unit (15, 16, 17) is a monitor of the flat-bed machine tool (3), a display of a mobile unit, in particular a positioning system (13), or a control monitor for outputting an image captured by a camera (11), in particular a machine interior camera, of the cut material (10).

## Revendications

1. Procédé de visualisation des informations de processus de fabrication (3A) lors de la fabrication de pièces (23A, ...), en particulier d'éléments en tôle, au moyen d'une machine-outil à banc plat (3), dans lequel les pièces (23A, ...) sont sorties en tant que produits coupés (10) sur une palette (9A) de la machine-outil à banc plat (3), une table de tri (9) ou une bande transporteuse et le produit coupé (10) se présente dans un agencement en forme de plaque selon une matière de départ en forme de plaque, comportant les étapes suivantes :
la fourniture de données d'image de pièce (23A', ...) dans un système de contrôle de fabrication (5), dans lequel les données d'image de pièce (23A', ...) sont affectées à l'au moins une des pièces (23A, ...) du produit coupé (10) et conçues pour être affichées sur une unité d'affichage (15, 16, 17),
la fourniture des informations de processus de fabrication (3A) spécifiques à la pièce dans le système de contrôle de fabrication (5),
la fourniture d'une base de données comportant des options de représentation (15A) dans le système de contrôle de fabrication (5), dans lequel les options de représentation (15A) sont respectivement affectées à une caractéristique de fabrication spécifique des informations de processus de fabrication (3A) et peuvent être appliquées aux données d'image de pièce (23A', ...) pour obtenir une représentation prédéterminée, spécifique à une caractéristique de fabrication, de données d'image de pièce (23A', ...) sur une unité d'affichage (15), et
l'affichage des données d'image de pièce (23A', ...) de l'au moins une des pièces (23A, ...) du produit coupé (10) sur l'unité d'affichage (15, 16, 17) en tenant compte des options de représentation (15A) spécifiques à la pièce,
**caractérisé en ce que** les informations de processus de fabrication (3A) ont été enregistrées de manière spécifique à la pièce lors de la fabrication de pièces (23A, ...) dans la machine-outil à banc plat (3) et comprennent les caractéristiques de fabrication des processus de séparation effectués dans la machine-outil à banc plat (3) lors de la fabrication de pièces (23A, ...).

2. Procédé selon la revendication 1, dans lequel les données d'image de pièce (23A', ...) sont lues à partir d'un plan de fabrication (5A) stocké dans le système de contrôle de fabrication (5), sur lequel est basée la fabrication de pièces (23A, ...), et/ou
dans lequel les données d'image de pièce (23A', ...) sont affichées sous la forme d'un graphique représentant le produit coupé (10), dans lequel les caractéristiques de fabrication sont mises, pour un opérateur (31), visuellement en évidence.

3. Procédé selon la revendication 1, dans lequel les données d'image de pièce (23A', ...) font partie d'une image du produit coupé (10) enregistrée par une caméra (11) et la prise en compte d'une option de représentation (15A) conduit à une superposition des données d'image affectées à une caractéristique de fabrication sur l'image du produit coupé (10).

4. Procédé selon l'une quelconque des revendications précédentes, dans lequel une caractéristique de fabrication est représentée, au moyen d'un spectre visible (R, G, B), lequel est converti en code de couleurs dans les données d'image de pièce (23A', ...) ou dans une ligne de délimitation de pièce (41), en tant qu'option de représentation, et/ou
dans lequel une caractéristique de fabrication concerne la qualité de coupe d'un processus de coupe laser de la matière de départ le long d'une ligne de contour.

5. Procédé selon l'une quelconque des revendications précédentes, dans lequel une caractéristique de fabrication, en particulier concernant le contour de séparation, est
- une collision entre une tête d'usinage de la machine-outil à banc plat (3) et la matière de départ à usiner ou une pièce (23A, ...) séparée,
- un tracé de coupe lors d'un processus de coupe,
- une réinsertion dans un processus de coupe,
- une anomalie telle qu'un long processus de plongée lors du processus de coupe,
- une distance de buse, en particulier de la matière plate, hors d'une plage déterminée,
- une salissure d'un verre de protection ou
- un signal de capteur plasma du processus de coupe.

6. Procédé selon l'une quelconque des revendications précédentes, dans lequel une caractéristique de fabrication est affecté à une position spécifique sur le produit coupé (10) sorti en forme de plaque ou se rapporte à un contour de séparation et/ou
dans lequel une caractéristique de fabrication est obtenue à partir d'un signal de capteur d'un dispositif de surveillance de fabrication, en particulier d'un système de détection de coupe de la machine-outil à banc plat (3), pour fournir des informations, en particulier de haute qualité, liées au processus et à la qualité de coupe, relatives au contour de coupe, au système de contrôle de fabrication (5).

7. Procédé selon l'une quelconque des revendications précédentes, dans lequel les options de représentation comprennent des visualisations graphiques, qui se basent, en particulier sur un code de couleurs (43, R, G, B) et/ou sur des symboles (37, 39, 41).

8. Procédé selon l'une quelconque des revendications précédentes, dans lequel, en fonction d'une stratégie d'individualisation sur laquelle repose le processus de tri, en tenant compte d'une étape de processus ultérieur, d'un client, d'une commande ou d'un module, une catégorie de pièces (23A, ...) est en outre formée et les pièces (23A, ...) de même catégorie sont affichées dans une couleur uniforme ou sont marquées d'une ligne de délimitation (24A, ...) entourant les pièces (23A, ...) de la même catégorie.

9. Système de fabrication (1) destiné à la fabrication de pièces (23A, ...), en particulier d'éléments en tôle, comportant :
une machine-outil à banc plat (3), qui est conçue pour sortir les pièces (23A, ...) sous forme de produits coupés (10) sur une palette (9A) de la machine-outil à banc plat (3), une table de tri (9) ou une bande transporteuse, dans lequel les produits coupés (10) en forme de plaque sont disposés selon une matière de départ en forme de plaque,
un système de contrôle de fabrication (5), qui est conçu pour mettre en œuvre un procédé de visualisation des informations de processus de fabrication (3A) lors de la fabrication de pièces (23A, ...) au moyen de la machine-outil à banc plat (3) selon l'une quelconque des revendications précédentes, et
une unité d'affichage (15, 16, 17) permettant d'afficher des données d'image de pièce (23A', ...), qui sont affectées à l'au moins une des pièces (23A, ...) du produit coupé (10), en tenant compte des options de représentation (15A) spécifiques à la pièce, qui sont affectées à une caractéristique de fabrication spécifique des informations de processus de fabrication (3A) et peuvent être appliquées aux données d'image de pièce (23A', ...) pour obtenir une représentation, prédéterminée spécifiquement pour une caractéristique de fabrication, des données d'image de pièce (23A', ...) respectives sur l'unité d'affichage (15).

10. Système de contrôle de fabrication selon la revendication 9, dans lequel l'unité d'affichage (15, 16, 17) est un moniteur de la machine-outil à banc plat (3), un écran d'une unité mobile, en particulier d'un système de positionnement (13) ou d'un moniteur de commande, destiné à la sortie d'une image prise par une caméra (11), en particulier une caméra d'espace intérieur de machine, du produit coupé (10).
